# EUROPÄISCHE PATENTSCHRIFT

(11) **EP 1 905 626 B1**
(45) Veröffentlichungstag und Bekanntmachung des Hinweises auf die Patenterteilung: **11.05.2011**
(21) Anmeldenummer: 07015765.6
(22) Anmeldetag: 10.08.2007
(51) Int. Cl.: B60J 1/20

(54) **Rollantrieb mit Federmotor und verminderter Antriebskraft**
Roll drive with clockwork motor and reduced transmission power
Entraînement à galets doté d'un moteur à ressort et force d'entraînement réduite

(30) Priorität: 27.09.2006 DE 102006046065; 27.09.2006 DE 102006046069; 27.09.2006 DE 102006046064; 13.10.2006 DE 102006049065; 13.11.2006 DE 102006053680
(43) Veröffentlichungstag der Anmeldung: 02.04.2008
(73) Patentinhaber: BOS GmbH & Co. KG, 73760 Ostfildern (DE)
(72) Erfinder: Hansen, Melf, 75053 Gondelsheim (DE)
(74) Vertreter: Rüger, Barthelt & Abel Patentanwälte

(56) Entgegenhaltungen:
- EP-A- 1 243 474
- EP-A- 1 645 448
- DE-A1-102004 036 392
- DE-U1- 20 309 690
- JP-A- 11 286 243

## Beschreibung

Aus dem Stand der Technik sind beispielsweise Heckfensterrollos bekannt, die elektrisch angetrieben sind. Diese Fensterrollos nach dem Stand der Technik weisen eine unterhalb der Hutablage drehbar gelagerte Wickelwelle auf, an der mit einer Kante die Rollobahn befestigt ist. Die andere Kante ist mit einem Zugstab verbunden, der endseitig in Führungsschienen geführt ist. Die Führungsschienen verlaufen neben den seitlichen Rändern des Heckfensters, ausgehend von der Hutablage bzw. darunter, bis in die Nähe der Fensteroberkante. Um die Rollobahn vorzuspannen, sitzt in der Regel in der Wickelwelle oder daneben ein Federmotor, durch den die Wickelwelle im Aufwickelsinne der Rollobahn vorgespannt ist.

Das Abwickeln bzw. Aufspannen der Rollobahn geschieht mit Hilfe von linienförmigen Schubgliedern, die in der Nutenkammer der Führungsschienen ausknicksicher geführt sind. Zum Antrieb der Schubglieder ist ein gemeinsamer Getriebemotor vorgesehen, der neben der Wickelwelle ungefähr auf Höhe von deren Mitte liegt. Um den Getriebemotor mit den unteren Enden der Führungsschienen zu verbinden sind Führungsrohre vorgesehen, die an dem Getriebegehäuse des Getriebemotors enden. Mit Hilfe dieser Führungsrohre werden die Schubglieder zwischen dem Antriebsmotor und den Führungsschienen ausknicksicher geführt, damit sie die Schubfunktion erbringen können.

Da aus Platzgründen der Motor verhältnismäßig dicht neben der Wickelwelle sitzt, verlaufen die Führungsrohre in der Nähe des Getriebemotors etwa parallel zu der Wickelwelle und müssen bei den Führungsschienen in einer Richtung rechtwinklig zur Wickelwelle umgelenkt werden. Wiederum aus Platzgründen ist der Krümmungsradius der Führungsrohre neben der Einmündung in die Führungsschienen vergleichsweise sehr eng.

Die Praxis zeigt, dass bei derartigen Rollos der überwiegende Teil der Antriebskraft, den der Getriebemotor liefert, von den Schubgliedern in den Führungsrohren verzehrt wird. Nur ein vergleichsweise kleiner Anteil der vom Motor gelieferten Kraft wird tatsächlich zum Ausfahren des Rollos benötigt.

Die Führungsrohre haben im Allgemeinen einen relativ komplizierten, dreidimensionalen Verlauf. Damit ist ihre Herstellung und Anpassung an die Fahrzeuggegebenheiten schwierig.

Hinzu kommt, dass die Schubglieder auch in jenem Abschnitt geschützt werden müssen, der aus der Sicht der Führungsschienen hinter dem Motor liegt. Die Länge dieses über den Motor überstehenden Teils des Schubglieds hängt von dem Ausfahrhub des Rollos ab. Am wenigsten steht das Schubglied über, wenn das Rollo ausgefahren ist, während der Überstand am größten ist, wenn das Rollo vollständig eingefahren ist. Da der Hub üblicherweise größer ist als die halbe Breite der Wickelwelle, muss das den überschüssigen Teil aufnehmende Speicherrohr ebenfalls kompliziert dreidimensional an die Platzverhältnisse im Fahrzeug angepasst werden. Somit ist nicht nur die Fabrikation des Fensterrollos auf der Seite des Produzenten aufwendig, sondern auch die Montage im Fahrzeug ist problematisch.

Die Schwierigkeit der bekannten Anordnung wurde zuvor in Verbindung mit einem Heckscheibenrollo beschrieben. Grundsätzlich ähnliche Schwierigkeiten ergeben sich bei Dachfensterrollos, die in einer vergleichbaren Weise angetrieben werden.

Die hohen Reibungsverluste der Schubglieder in den Führungs- und Speicherrohren erschweren obendrein erheblich die Gestaltung und Bemessung eines elektrischen Einklemmschutzes, der auf der Messung des Motorstroms basiert. Je nachdem wie groß die Reibungsverluste sind, steht bei gegebenem Abschaltstrom mehr oder weniger Kraft zur Verfügung, um Körperteile einzuklemmen oder einzuquetschen.

Die EP 1 645 448 A1 beschreibt ein Heckscheibenrollo das nach Art einer Gegenzuganlage ausgeführt ist. Das Rollo weist eine drehbar gelagerte Wickelwelle auf, an der mit einer Kante die Rollobahn befestigt ist. An der von der Wickelwelle abliegenden Kante der Rollobahn ist an dieser ein Zugstab angebracht. Seitlich neben der aufgespannten Rollobahn verlaufen zwei Führungsschienen, die den Zugstab formschlüssig führen. Mittels zweier Schubglieder, die in der jeweiligen Führungsschiene gleiten, kann der Zugstab von der Wickelwelle weg bewegt werden. Jedes der Schubglieder weist auf der Außenseite eine Verzahnung auf. Jedem Schubglied ist ein Antriebszahnrad zugeordnet, das mit dem betreffenden Schubglied formschlüssig zusammenwirkt. Die beiden Antriebszahnräder sitzen drehfest auf einer gemeinsamen Verbindungswelle, die durch die Wickelwelle hindurch führt.

Die Schubglieder liegen kinematisch zwischen den Antriebarädern und dem Zugstab. Ein elektrischer Antriebemotor dient dazu die Verbindungswelle anzutreiben, während eine zu einer Spirale aufgewickelte Blattfeder die kinematische elastische Verbindung zwischen der Wickelwelle und der Verbindungswelle herstellt. Die Aufgabe dieser Spiralfeder besteht darin, die sich abhängig vom Wickeldurchmesser ändernde Umfangsgeschwindigkeit gegenüber der Verbindungswelle auszugleichen.

Bei der bekannten Anordnung kommt die Antriebskraft im Wesentlichen ausschließlich aus dem Motor.

Die Komplexität bei der Montage ist nicht unerheblich.

Darüber hinaus ist es aus der JP 11-286243 bekannt, eine Laderaumabdeckung mit zwei miteinander nicht synchronisierten Motoren zu betreiben. Die Anordnung sieht vor, dass je Seite der Laderaumabdeckung eine Führungsschiene vorgesehen ist. In jeder Führungsschiene läuft ein nicht endloses Schubglied, das über eine Antriebsscheibe geführt ist. Das Arbeitstrum des Schubglieds ist mit einem aus der Führungsschiene herausstehenden Haken versehen, der mit einem komplimentären Kupplungsstück an der Vorderkante der Rollobahn zusammenwirkt. Das Schubglied liegt um die Antriebsscheibe herum, und es entsteht ein Leertrum das ebenfalls in der Führungsschiene geführt ist.

Die Antriebsscheibe ist über ein Winkelgetriebe mit einem Elektromotor gekuppelt. Über die Kupplung zwischen dem Schubglied und der Antriebsscheibe ist der Druckschrift nichts weiter zu entnehmen.

Ausgehend hiervon ist es Aufgabe der Erfindung ein Fensterrollo für Kraftfahrzeuge zu schaffen, bei dem der Antrieb geringere Reibungsverluste aufweist.

Diese Aufgabe wird erfindungsgemäß Fensterrollo für Kraftfahrzeuge gelöst, das die Merkmale des Anspruchs 1 oder 2 aufweist.

Bei dem neuen Fensterrollo ist, wie üblich, eine drehbar gelagerte Wickelwelle vorgesehen, die zwei Stirnenden aufweist. An dieser Wickelwelle ist in der üblichen Weise die Rollobahn mit einer Kante befestigt. Die andere Kante der Rollobahn ist mit einem Zugstab verbunden, der endseitig in Führungsschienen läuft. Die Führungsschienen erstrecken sich beidseits der aufgespannten Rollobahn und definieren den Weg, den der Zugstab von der eingefahrenen zur ausgefahrenen Stellung durchläuft.

Der Antrieb des Zugstabs erfolgt mit Hilfe von zwei Schubgliedern. Jedes der beiden Schubglieder ist einer entsprechenden Führungsschiene zugeordnet und wird von dieser geführt. Die beiden Schubglieder wirken endseitig mit dem Zugstab zusammen, um den Zugstab von der Wickelwelle fortbewegen zu können.

Um die Schubglieder anzutreiben ist für jedes Schubglied ein eigenes Antriebszahnrad vorgesehen. Diese sitzen drehfest auf einer gemeinsamen Antriebswelle und können unmittelbar in der Nähe des Fußendes der Führungsschiene, d.h. in der Nähe der Wickelwelle vorgesehen sein. Damit entfällt ein nennenswertes oder längeres Stück Führungsrohr zwischen dem Fußende der Führungsschiene und dem Antriebszahnrad. Das aus der jeweiligen Führungsschiene austretende Schubglied kann praktisch unmittelbar in ein Getriebegehäuse einlaufen, das dem Fußende der Führungsschiene benachbart ist. Hierdurch werden die beim Stand der Technik üblichen Verbindungsrohre eingespart.

Durch das Einsparen der Verbindungsrohre wird in zweierlei Hinsicht Antriebskraft eingespart. Zum Einen entfällt die Antriebskraft, die erforderlich ist, um die entsprechende Länge an Schubglied durch ein gegebenenfalls sogar gerade verlaufendes Führungsrohr zu bewegen. Zum Anderen wird Reibungskraft eingespart, weil der gekrümmte Verlauf des Verbindungsrohres fehlt, der Ursache ist für eine deutlich erhöhte Reibung des Schubglieds in dem Verbindungsrohr. Die Antriebskraft, die vom Motor geliefert wird, steht nunmehr im Wesentlichen ausschließlich zur Bewegung des Rollos zur Verfügung. Die Reibungskraft, die die Schubglieder in der Führungsschiene erzeugen, ist vergleichsweise klein und kalkulierbar, weil die Führungsschienen fast gerade verlaufen.

Zum Antrieb des Rollos ist in der üblichen Weise ein elektrischer Antriebsmotor vorhanden. Der Antriebsmotor treibt z.B. die Wickelwelle an. Der Antrieb der Verbindungswelle erfolgt über einen Federmotor, wie er aus dem Stand der Technik für Rollos bekannt ist. Die umgekehrte Kinematik ist ebenfalls möglich, d.h. der Federmotor ist mit der Wickelwelle gekuppelt und der Elektromotor mit der Verbindungswelle.

Da bei der neuen Lösung keine dreidimensionale Umlenkung des Schubglieds auftritt, kann ein Schubglied verwendet werden, das lediglich an einer Seite eine Verzahnung aufweist, oder das eine Rundumverzahnung aufweist. Die Rundumverzahnung eröffnet die Möglichkeit durch eine Art Schraubenbewegung das Schubglied in der Führungsschiene bzw. der Anordnung zu positionieren. Durch die Schraubbewegung wird das Schubglied an dem feststehenden Antriebszahnrad gleichsam "vorbeigeschraubt".

Je nach Karosserieverhältniasen können die Schubglieder entweder frei in der Karosserie verlaufen, oder es sind hierzu Speicherrohre vorgesehen, die aus einem flexiblen Material bestehen, um das Leertrum aufzunehmen. Speicherrohre aus flexiblem Material können frei in der Karosserie verlegt werden und brauchen seitens des Herstellers des Fensterrollos nicht vorgeformt zu werden.

Entsprechend der Geometrie des Fensters kann der Zugstab längenveränderlich sein.

Um die Schubglieder knicksicher zu führen ist es vorteilhaft, wenn Führungsschienen Verwendung finden, die eine hinterschnittene Führungsnut enthalten. Eine solche hinterschnittene Führungsnut setzt sich, im Querschnitt gesehen, aus einer Nutenkammer und einem Nutenschlitz zusammen.

Zweckmäßig ist, wenn die Schubglieder eine Rundumverzahnung aufweisen.

Die Verbindungswelle kann außerhalb der Wickelwelle zu dieser parallel, oder durch die Wickelwelle hindurch, verlaufen. Bei der einen Ausführungsform ist der benötigte Platz etwas größer, dafür kann die Montage etwas einfacher gestaltet sein.

Der Federmotor kann von einer Schraubenfeder oder einer Spiralfeder gebildet sein. Er kann sich innerhalb der Wickelwelle befinden oder die Verbindungswelle umgeben oder parallel neben beiden angeordnet sein.

Zur Aufnahme des Leertrums des Schubglieds können Speicherrohre vorhanden sein. Diese können aus einem flexiblen Material bestehen, so dass sie frei in der Karosserie verlegbar sind.

Basierend auf dem oben genannten Konzept kann auch eine Laderaumabdeckung ausgeführt sein.

Bei Laderaumabdeckungen besteht das Problem, dass nach dem Herausnehmen der Kassette für die Rollobahn zwischen den Führungsschienen keinerlei Verbindung mehr bestehen darf. Dementsprechend gibt es eine Reihe von Versuchen die Laderaumabdeckung elektrisch zu betätigen und gleichzeitig mit dieser Einschränkung fertig zu werden.

Die EP 1 243 474 A2 zeigt eine Laderaumabdeckung für Kraftfahrzeuge. Die Laderaumabdeckung weist eine drehbar gelagerte Wickelwelle auf, an der mit einer Kante die Rollobahn befestigt ist. An der von der Wickelwelle abliegenden Kante der Rollobahn ist ein Zugstab vorgesehen. Dieser Zugstab läuft in Führungsschienen, die beidseits aufgespannten Rollobahn angeordnet sind. Hierzu enthält jede Führungsschiene eine Führungsnut für den Zugstab. Zum Antrieb des Zugstabs sind zwei nicht endlose Schubglieder vorgesehen, von denen jedes in dem zugehörigen Führungsschiene läuft. Für jedes Schubglied weist die bekannte Laderaumabdeckung jeweils ein Antriebszahnrad auf, das bei der betreffenden Führungsschiene angeordnet ist. Jedem Antriebszahnrad ist ein eigener elektrischer Antriebsmotor zugeordnet, die über eine parallel zu der Wickelwelle verlaufende Synchronisationswelle mechanisch miteinander gekuppelt sind, um eine gleiche Drehzahl zu erzwingen.

Die beiden Motoren sind nicht karosseriefest angeordnet, sondern sie befinden sich in dem Kassettengehäuse, in dem die Wickelwelle der bekannten Laderaumabdeckung drehbar gelagert ist. Die Speicherrohre, die das Leertrum des jeweiligen Schubglieds aufnehmen, verlaufen in der Kassette parallel zu der Wickelwelle, so dass eine komplizierte Umlenkung des Schubglieds erforderlich ist, was erheblich die Reibung erhöht.

Die Schubglieder sind als Lochbänder ausgebildet. Je ein Lochband ist mit einem in der Führungsschiene laufenden Ende des Zugstab zug- und druckfest verbunden.

Die Erfahrung mit dieser Konstruktion ist nicht befriedigend, weil wegen des mehrdimensionalen gekrümmten Verlaufes ein sehr flexibles Lochband verwendet werden muss, dass nicht hinreichend schubsteif ist. Zum Ausbreiten der Rollobahn muss von dem Lochband auf den Zugstab eine Druckkraft ausgeübt werden. Wegen der nicht ausreichenden Steifigkeit neigt das Lochband dazu, sich in den Führungsschienen ziehharmonikaartig zusammenzudrücken, was zu einer erheblich erhöhten Reibung in der Führungsschiene führt.

Ausgehend hiervon ist es gemäß einem weiteren Aspekt Aufgabe der Erfindung eine Laderaumabdeckung zu schaffen, die diesen Einschränkungen nicht unterliegt.

Bei der neuen Laderaumabdeckung für Kraftfahrzeuge ist eine drehbar gelagerte Wickelwelle vorgesehen. An der Wickelwelle ist mit einer Kante die Rollobahn befestigt. Die andere Kante ist an einem Zugstab verankert, der gleichzeitig auch in bekannter Weise als Konturplatte ausgebildet sein kann. Beidseits der Rollobahn erstrecken sich zwei Führungsschienen. Die Führungsschienen begrenzen seitlich die obere Öffnung, über die der Zugang zu der Ladebucht erfolgt. Sie liegen üblicherweise unterhalb der hinteren Seitenfenster in schmalen seitlichen Konsolen, die den Spalt zwischen den geraden Führungsschienen und der üblicherweise bombierten Innengestalt der Karosserie schließen.

Zur Betätigung des Zugstabs sind zwei nicht endlos ausgeführte Schubglieder vorgesehen, d.h. die Enden des Schubglieds sind nicht miteinander verbunden.

Der Antrieb jedes Schubglieds geschieht über ein Antriebsrad in formschlüssiger Weise. Dieses Antriebsrad teilt das Schubglied in ein Arbeitstrum und ein Leertrum. Das Arbeitstrum läuft in derselben Führungsnut der Führungsachiene in der auch der Zugstab gleitet. Das Leertrum hingegen wird von einem Rohr aufgenommen, das unterhalb der Führungsnut in der Führungsschiene ausgebildet ist. Dieses Rohr läuft parallel zur Führungsnut.

Gegebenenfalls ist es zweckmäßig, das Speicherrohr auch als Nut einstückig in der Führungsschiene auszubilden.

Jedem der beiden Antriebszahnräder ist ein eigener Getriebemotor zugeordnet, der karosseriefest angeordnet ist.

Aufgrund dieser Anordnung ist die Kassette mit der Wickelwelle vollkommen passiv. Die elektrischen Antriebsmittel sind hingegen karosseriefest, womit elektrische Verbindungen zwischen dem Fahrzeug und der Kassette entfallen.

Ferner wird jedes Schubglied nur um eine Achse umgelenkt. Eine komplizierte mehrdimensionale Umlenkung ist nicht erforderlich. Damit kann ein verhältnismäßig steifes Schubglied verwendet werden. Insbesondere ist es nicht mehr notwendig, Antriebszahnräder mit sehr kleinem Durchmesser zu verwenden, die in dem Gehäuse für die Wickelwelle Platz finden. Es können verhältnismäßig große Zahnräder zur Anwendung kommen, die ohne weiteres in der Seitenverkleidung des Kofferraums Platz finden können. Aus all diesen Gründen können vergleichsweise biegesteife Schubglieder eingesetzt werden, die nicht dazu neigen, sich in der Führungsschiene stark zu verwerfen und entsprechend zu klemmen.

Da zwei getrennte Antriebsmotoren Verwendung finden, kann jeder Antriebsmotor für sich vergleichsweise sehr klein und damit platzsparend ausgeführt sein.

Da die Antriebsmotoren außerhalb des Gehäuses der Laderaumabdeckung untergebracht sind, tragen sie nicht mehr, wie beim Stand der Technik, zur Vergrößerung des Gehäusevolumens bei. Hierdurch wird die Handhabung der Laderaumabdeckung beim Herausnehmen wesentlich vereinfacht, denn auch das Gewicht ist reduziert.

Die Schubglieder können in der üblichen Weise, wie bei Fensterrollos, eine Rundumverzahnung aufweisen und es werden ohne weiteres in der Nutenkammer der Führungsnut ausknicksicher geführt.

Es besteht auch ohne weiteres die Möglichkeit einen längenveränderlichen Zugstab zu verwenden, beispielsweise bei Karosserieformen, bei denen die Gürtellinie, ausgehend von den hinteren Türen bis in Richtung auf die Heckklappe, leicht eingezogen verläuft.

Um ein leichtes ankoppeln der Schubglieder an den Zugstab zu ermöglichen und andererseits die Länge der wickelwelle nicht zu begrenzen ist es zweckmäßig, wenn die Antriebsräder für die Schubglieder, bezogen auf die übliche Nomenklatur, unterhalb der Führungsschienen angeordnet sind.

Eine einfache Zwangssynchronisation der ansonsten mechanisch nicht synchronisierten und auch elektrisch nicht synchronisierten Motoren lässt sich erreichen, wenn die Schubglieder mit mechanischen Anschlägen versehen sind, die den Arbeitshub begrenzen.

Die üblicherweise verwendeten permanent erregten Motoren zeigen Motordrehzahlen, die aufgrund von Fertigungstoleranzen nur sehr wenig schwanken. Wenn die Motoren beim Anschalten gleichzeitig starten, erreichen die Schubglieder fast gleichzeitig das Ende ihres Arbeitshubs. Die zeitliche Drift ist sehr klein.

Da sie am Ende ihres Arbeitshubs an einen formschlüssigen Anschlag laufen, werden sie auch hier wieder zwangsläufig synchronisiert, ohne dass sonstige komplizierte mechanische Synchronisationen oder elektrische Synchronisationen vorhanden sind, die während des Arbeitshubs die Synchronbewegung erzwingen. Bei dem neuen Antriebkonzept laufen die Motoren während des Arbeitshubs völlig unsynchronisiert. Eine Synchronisation tritt nur jeweils am Ende des Arbeitshubs auf.

Im Übrigen sind Weiterbildungen der Erfindung Gegenstand von Unteransprüchen.

Die nachfolgende Figurenbeschreibung beschränkt sich auf die Erläuterung der für das Verständnis wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen vereinfacht und enthalten nicht jedes bei der praktischen Ausführung gegebenenfalls vorhandene Detail.

In der Zeichnung sind Ausführungsbeispiele des Gegenstandes der Erfindung dargestellt.
- Fig. 1: zeigt eine aufgebrochene Fondpartie eines PKW's in einer perspektivischen Darstellung;
- Fig. 2: zeigt den prinzipiellen Aufbau des Heckfenster- rollos des Fahrzeugs nach Fig. 1;
- Fig. 3: zeigt ein Heckfensterrollo, bei dem die Verbin- dungswelle koaxial durch die Wickelwelle ver- läuft; diese Variante ist kein Teil der Erfindung wie beans prucht in den Ansprüchen 1 und 2.
- Fig. 4: zeigt ein Heckfensterrollo, mit zwei Federmotoren zum Antrieb der Antriebszahnräder;
- Fig. 5: zeigt die aufgebrochene Heckpartie eines Kraft- fahrzeuge unter Veranschaulichung einer Laderaum- abdeckung;
- Fig. 6: zeigt den prinzipiellen Aufbau der Ladraumabdek- cung des Fahrzeugs nach Fig. 5; und
- Fig. 7: zeigt den Antrieb der Laderaumabdeckung in einer Prinzipdarstellung in Verbindung mit einer der beiden Führungsschienen, in einer perspektivi- schen Ansicht.

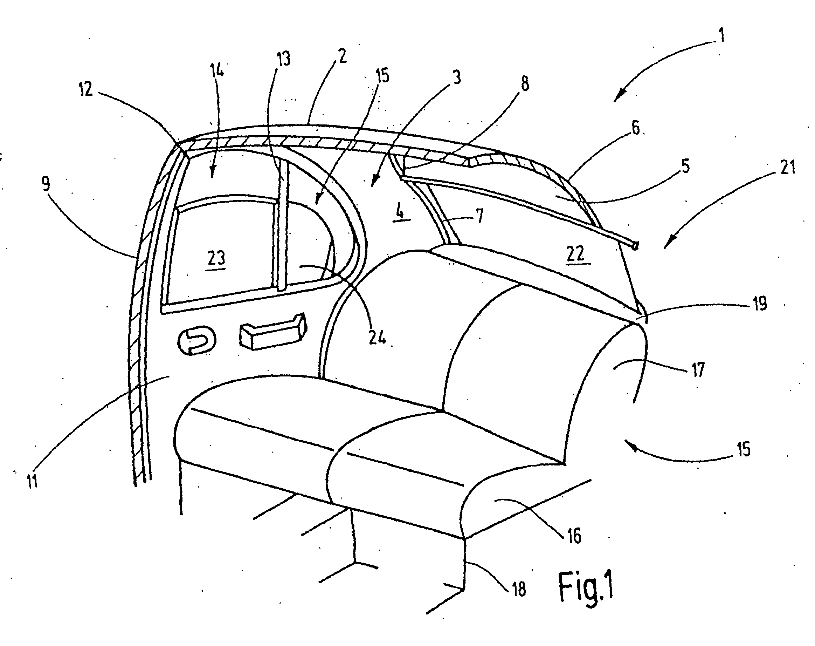

Fig. 1 stellt den aufgebrochenen abgeschnittenen Fondbereich eines PKW dar. Die Figur veranschaulicht einen Blick auf die rechte Innenseite, die zu der weggebrochenen linken Innenseite spiegelbildlich ist. Soweit nichts anderes angegeben, gelten die Erläuterungen zur rechten Karosserieseite sinngemäß auch für die linke Karosserieseite. Die Darstellung ist vereinfacht, so sind beispielsweise Karosserieinnenstrukturen, die Versteifungen und Befestigungsmittel nicht gezeigt, da die Darstellung für das Verständnis der Erfindung nicht erforderlich ist.

Der veranschaulichte Karosserieabschnitt 1 weist ein Dach 2 auf, von dem seitlich eine C-Säule 3 nach unten zu einer nicht gezeigten Bodengruppe führt. Eine entsprechende C-Säule wäre auf der weggebrochenen Seite des Fahrzeugs zu denken. Die C-Säule 3 ist auf der Innenseite mit einer Verkleidung 4 versehen.

Das Dach 2 geht an seiner Hinterkante in ein Heckfenster 5 über, das an der Oberseite von einer Fensteroberkante 6 begrenzt ist. Von den Seitenkanten, die zueinander spiegelbildlich verlaufen, ist lediglich ein Abschnitt 7 zu erkennen, der an einem Eckbereich 8 in die Fensteroberkante 6 übergeht.

Die Breite des Heckfensters 5 ist auf der Höhe der Gürtellinie der Karosserie größer als im Bereich der Fensteroberkante 6. Im Abstand vor der C-Säule 3 befindet sich eine B-Säule 9, an die in bekannter Weise eine hintere rechte Seitentür 11 anscharniert ist. Die rechte hintere Seitentür 11 enthält einen Fensterausschnitt 12, der durch eine vertikale Strebe 13 in einen im Wesentlichen viereckigen Abschnitt 14 und einen etwa dreieckigen Abschnitt 15 aufgeteilt ist.

Zu dem Innenraum gehört ferner eine Rücksitzbank 15 mit einer Rücksitzfläche 16 und einer Rücksitzlehne 17. Die Rücksitzfläche 17 liegt auf einer Bodengruppe 18 auf.

Zwischen der hinteren Oberkante der Rücksitzlehne 17 und dem Heckfenster 5 erstreckt sich eine Hutablage 19.

Das Heckfenster 5 ist mit einem Heckfensterrollo 21 versehen, von dem lediglich in Fig. 1 eine Rollobahn 22 zu erkennen ist. Weitere Rollos befinden sich bei dem Seitenfenster 12, und zwar in dem viereckigen Fensterabschnitt 14 eine Rollobahn 23 und in dem dreieckigen Abschnitt 15 eine Rollbahn 24.

Die Antriebsart der Rollobahnen 23 und 24 entspricht der Antriebsart des Heckscheibenrollos 21, weshalb es genügt, lediglich dessen Aufbau im Einzelnen zu erläutern.

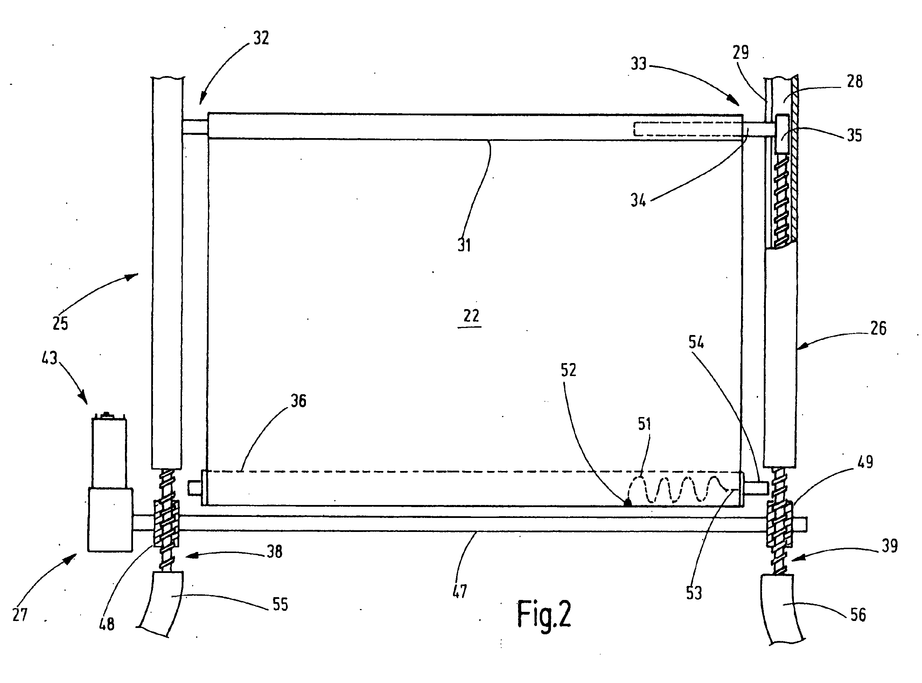

Zu dem Heckscheibenrollo 21 gehören gemäß Fig. 2 zwei seitlich des Heckfensters 5 verlaufende Führungsschienen 25 und 26 sowie ein Antriebssystem 27.

Die Führungsschienen 25 und 26 sind spiegelbildlich zueinander angeordnet und folgen dem Verlauf der Seitenkante des Heckfensters 5. Abweichend von der Darstellung in Fig. 2 konvergieren sie mehr oder weniger stark in Richtung auf das Dach 2.

Da die beiden Führungsschienen 25 und 26 untereinander gleich sind, genügt die Erläuterung der inneren Struktur der Führungsschiene 26. Die Erläuterung gilt sinngemäß für die Führungsschiene 25.

In der Führungsschiene 26 befindet sich eine hinterschnittene Führungsnut 27, deren Profil sich aus einer Nutenkammer 28 und einem Nutenschlitz 29 zusammensetzt. Die Weite des Schlitzes 29 ist kleiner als die lichte Weite der Nutenkammer 28, wodurch sich die hinterschnittene Struktur ergibt.

Die beiden Führungsschienen 25 und 26 dienen dazu, einen Zugstab 31 zu führen, an dem mit einer Kante die Rollobahn 22 befestigt ist. Der Zugstab 31 setzt sich aus einem Mittelstück zusammen, in dem zwei Endstücke 32 und 33 teleskopartig geführt sind. Das Mittelstück sitzt beispielsweise in einer an der Rollobahn 22 ausgebildeten schlauchförmigen Schlaufe.

Jedes der beiden Endstücke 32 und 33 weist eine Teleskopstange 34 auf, an deren freien Ende ein Gleitstück 35 sitzt. Die Teleskopstange 34 ist im Querschnitt so bemessen, dass sie durch den Schlitz 29 mit Spiel hindurchführt. Der Querschnitt des Gleitstücks 35 hingegen ist an den Querschnitt der Nutenkammer 28 angepasst, die beispielsweise Kreisquerschnitt hat.

Das von dem Zugstab 31 abliegende Ende der Rollobahn 22 ist an einer Wickelwelle 36 befestigt.

Die Antriebseinrichtung 27 dient dazu, die Rollobahn 22 zwischen der ausgezogenen Stellung, in der sie vor dem Heckfenster 5 ausgebreitet ist, in eine zurückgezogene Stellung zu überführen, in der der Zugstab 31 entweder auf der Hutablage 19 aufliegt oder durch den dort vorhandenen Schlitz zurückgezogen ist.

Zu der Antriebseinrichtung 27 gehören zwei linienförmige biegeelastische Schubglieder 38 und 39, die ebenfalls gleich ausgebildet sind. Jedes der Schubglieder 38, 39 setzt sich aus einer im Querschnitt kreisförmigen Seele 41 und einer auf der Außenseite der kreisförmigen Seele 41 befestigten Wendel 42 zusammen. Es entsteht hierdurch eine Art rundumverzahnte biegeelastische Zahnstange. Der Außendurchmesser der Schubglieder 38, 39 entspricht der lichten Weite der Nutenkammer 28. Hierdurch sind die beiden Schubglieder 38, 39 in ihren zugehörigen Führungsschienen 25 und 26 ausknicksicher geführt und können Druckkräfte übertragen. Ihr Durchmesser ist größer als es der Schlitzweite 29 entspricht, so dass sie auch bei Druckbelastung nicht seitlich durch den Schlitz 29 ausknicken können.

Zu der Antriebseinrichtung 27 gehört ferner ein Getriebemotor 43, dessen Ausgangswelle 44 starr mit einer Verbindungswelle 47 verbunden ist. Die Verbindungswelle 47 verläuft neben der Wickelwelle 36 und parallel zu dieser.

Auf der Verbindungswelle 47 sitzen drehfest zwei Stirnzahnräder 48 bzw. 49, die auf der Außenumfangsfläche mit einer Verzahnung versehen ist, die einen formschlüssigen Eingriff mit dem betreffenden zugehörigen Schubglied 38, 39 gestattet. Durch nicht weiter veranschaulichten Mittel werden die beiden Schubglieder 38, 39 in radialer Richtung gegen das zugehörige Antriebszahnrad 48, 49 angedrückt, damit stets der Eingriff bestehen bleibt. Die Schubglieder 38, 39 liegen auf derselben Seite bezogen auf die Drehachse auf dem zugehörigen Antriebszahnrad 48, 49 auf, auf der auch die Rollobahn 22 von der Wickelwelle 36 abläuft.

Die Antriebszahnräder/Stirnzahnräder 48, 49 befinden sich neben den Enden der Wickelwelle 36, in Verlängerung der Umfangsflächen der Antriebszahnräder 48, 49.

Im Inneren der rohrförmigen Wickelwelle 36 befindet sich ein ebenfalls zu der Antriebseinrichtung 27 gehörender Federmotor 51, der beispielsweise in Form einer Schraubenfeder ausgeführt ist. Ein Ende der Schraubenfeder ist bei 52 drehfest mit der Wickelwelle 36 verbunden. Das andere Ende 53 ist an einem drehfesten Lagerzapfen 54 verankert, auf dem die Wickelwelle 36 drehbar gelagert ist. Der Lagerzapfen 54 ist in dem Fahrzeug drehfest verankert.

Der Vollständigkeit halber sei noch erwähnt, dass aus der Sicht der jeweiligen Führungsschiene 25, 26 auf der gegenüberliegenden Seite des betreffenden Zahnrads 48, 49 sich ein biegeelastisches Speicherrohr 55 bzw. 56 befindet, das entsprechend den räumlichen Verhältnissen weitgehend frei im Fahrzeug verlegt wird.

Die Maßnahmen, die getroffen sind, um die Speicherrohre 55 und 56 ortsfest zu halten, sind, da sie für das Verständnis der Erfindung nicht von Bedeutung sind, nicht dargestellt. Ebenso fehlt beispielsweise ein eventuell vorhandenes Gehäuse, das das Zahnrad 48 bzw. 49 umgibt und das zum Durchtritt des zugehörigen biegeelastischen Schubglieds 38, 39 eine entsprechende Tangentialbohrung enthält.

Die Darstellung in den Figuren ist nicht maßstäblich. Vielmehr geht es hier darum, das Wesentliche des erfindungsgemäßen Antriebskonzepts zu erläutern. Die einschlägigen Werte für die Bemessung der Führungsschienen 25 und 26 sowie der daraus resultierenden Außendurchmesser der beiden elastische biegsamen Schubglieder 38, 39 sind aus der Praxis bekannt.

Die Wirkungsweise der gezeigten Anordnung ist wie folgt:
Es wird vom eingefahrenen Zustand ausgegangen. In diesem Zustand ist die Rollobahn zur Gänze auf der Wickelwelle 36 aufgewickelt. Die beiden Schubglieder 38, 39 sind hinreichend weit in die Speicherrohre 55 und 56 zurückgeschoben. Der Federmotor 51 erzeugt eine Vorspannung, die die Tuchspannung in der Rollobahn 22 aufrecht erhält.

Wenn, ausgehend von dieser Stellung, der Benutzer den Antriebsmotor 43 einschaltet, werden die beiden Antriebszahnräder 48 und 49 gleichzeitig in Umdrehungen versetzt. Sie nehmen dabei formschlüssig die Schubglieder 38 und 39 mit und fördern sie in Richtung auf die Führungsschienen 25 und 26. Entsprechend wird über das formschlüssige Zusammenwirken zwischen den Schubgliedern 38, 39 und dem Gleitstück 35 die Zugstange 31 von der Wickelwelle 36 weg bewegt. In dem Maße, in dem sich die Zugstange 31 von der Wickelwelle 36 weg bewegt wird, wird die Rollobahn 22 vor dem Heckfenster aufgespannt.

Ersichtlicherweise beschränkt sich die von dem Antriebsmotor 43 aufzubringende Antriebskraft darauf, die Vorspannkraft des Federmotors 51 zu überwinden und die Kraft zu liefern, die erforderlich ist, um die beiden Schubglieder 38, 39 längs ihres Bewegungswegs zu transportieren. Da die beiden Schubglieder 38 und 39 praktisch keine nennenswerte Umlenkung erfahren, ist die Reibungskraft, bzw. sind die Reibkraftverluste extrem gering. Die beiden Führungsschienen 25 und 26 verlaufen fast gerade, bzw. nur mit einer sehr leichten Krümmung, entsprechend dem etwas gekrümmten Verlauf, beispielsweise der Seitenkanten der Heckscheibe. Auch in den beiden Speicherrohren 55 und 56 tritt keine nennenswerte Reibkraft auf.

Im voll ausgefahrenen Zustand der beispielsweise durch formschlüssige Anschläge definiert ist, ist die Rollobahn 22 völlig ausgefahren. Der Federmotor 51 ist ein entsprechendes Stück, entsprechend ca. 10 Umdrehungen, weiter aufgezogen. Zum Einfahren wird der Getriebemotor 43 in der entgegengesetzten Richtung in Gang gesetzt. Hierdurch werden die beiden Schubglieder 38 und 39 aus den Führungschienen 25, 26 zurückgezogen und in die Speicherrohre 55, 56 transportiert.

In dem Maße, in dem die beiden Schubglieder 38, 39 zurückweichen, wird die Rollobahn 31 unter der Wirkung des eine entsprechende Vorspannkraft erzeugenden Federmotors 51 wieder auf die Wickelwelle 36 aufgewickelt. Beim Einfahren folgt der Zugstab 31 unmittelbar der Zurückbewegung der beiden Schubglieder 38, 39. Wie unschwer aus der Funktionsbeschreibung zu erkennen ist, wirkt der Getriebemotor 43 zusammen mit der Schraubenfeder 51 bzw. dem Federmotor als Antriebseinrichtung.

Abweichend von der Darstellung in Fig. 2 ist es ohne weiteres auch möglich, den Federmotor koaxial zu der Verbindungswelle 47 anzuordnen, indem die Verbindungswelle 47 durch die Schraubenfeder 51 hindurch führt, während die Wickelwelle 36 von dem Getriebemotor 43 angetrieben wird.

Die Funktion ist homolog zu der oben beschriebenen Funktion. Der Unterschied besteht lediglich darin, dass die Wickelwelle, die über den Getriebemotor 43 in Gang gesetzt wird, den Ausfahrhub vorgibt und definiert, während mit Hilfe der Schubglieder 38, 39 und dem jetzt mit der Verbindungswelle 47 gekuppelten Federmotor 51 die Tuchspannung erzeugt wird.

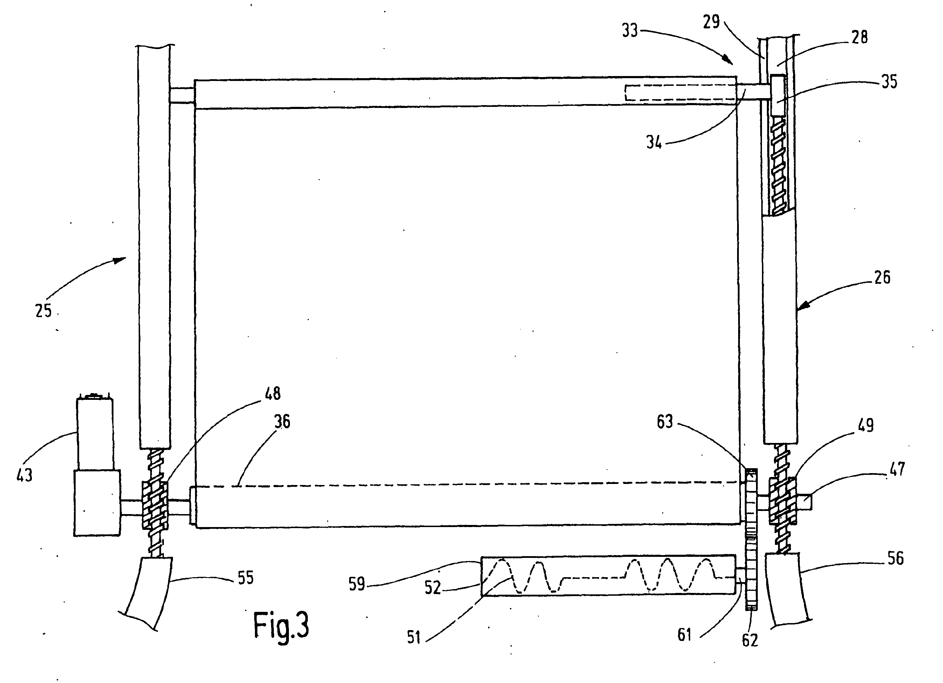

Fig. 3 zeigt eine Ausführungsform des Fensterrollos, bei der die Verbindungswelle 47 koaxial durch die Wickelwelle 36 hindurch führt. Der Federmotor 51 sitzt in einem eigenen Gehäuse 59, das in dem Fahrzeug befestigt ist. Ein Ende der Schraubenfeder 51 ist wiederum bei 52 mit dem Boden des becherförmigen Gehäuses 59 verbunden, während das andere Ende an einer Welle 61 verankert ist. Die Welle 61 trägt drehfest ein Stirnzahnrad 62. Das Stirnzahnrad 62 kämmt mit einem Stirnzahnrad 63, das drehfest mit der Wickelwelle 36 gekoppelt ist. Das Zahnrad 63 ist koaxial zu der Wickelwelle angeordnet, die im Übrigen drehbar auf der Verbindungswelle 47 gelagert ist.

Die Funktionsweise entspricht der Funktonsweise des Rollos nach Fig. 2.

Es ist ohne weiteres klar, dass die beschriebene Rollokonstruktion nicht nur bei Heckfensterrollos sondern auch bei Seitenfensterrollos oder Dachfensterrollos eingesetzt werden kann.

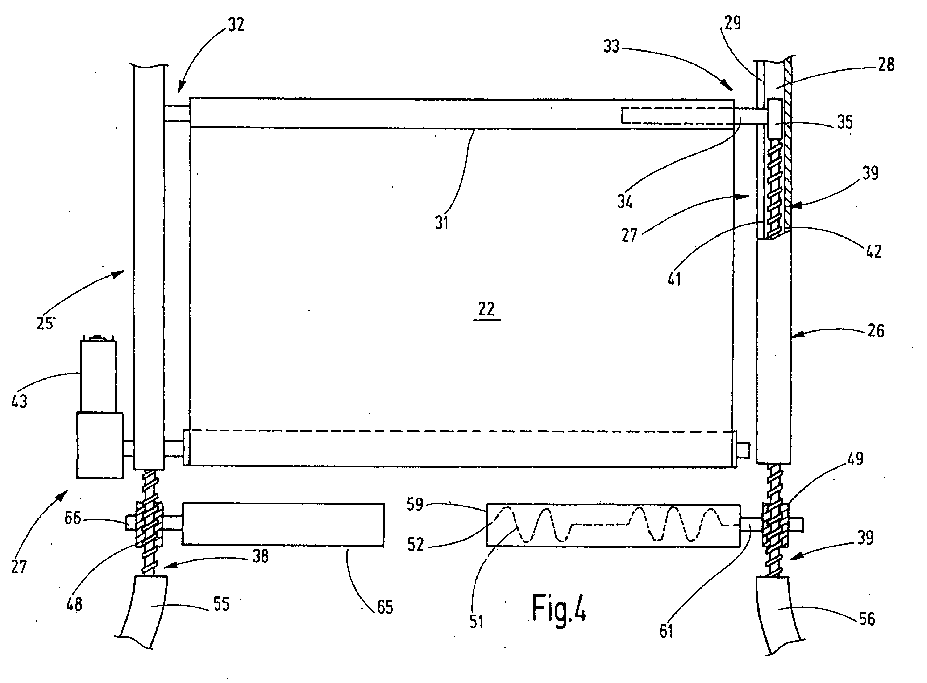

Wenn die durchgehende lange Verbindungswelle 47 stört, kann auch eine Anordnung gemäß Fig. 4 eingesetzt werden. Bei dieser Anordnung ist das Antriebszahnrad 49 mit dem Federmotor 51 gekoppelt. Auf der Ausgangswelle 61 des Federmotors sitzt das Antriebszahnrad 49.

Die Betätigung des Antriebszahnrads 48 geschieht mit Hilfe eines Federmotors 65, der denselben Aufbau hat, wie der Federmotor 51. Auf seiner Ausgangswelle 66 sitzt drehfest das Antriebszahnrad 48.

Der Zwangsantrieb geschieht, indem der elektrische Antriebsmotor 43 unmittelbar drehfest mit der Wickelwelle 36 in Verbindung steht.

Durch in Gang setzen der Wickelwelle 36 kann das Rollo ausgefahren werden. Die unter der Wirkung der beiden Federmotoren 51 und 65 stehenden Antriebszahnräder 48 und 49 drücken das Arbeitstrum des jeweiligen Schubglieds 38, 39 gegen den Zugstab 31 und halten so die Tuchspannung aufrecht.

Zum Einfahren wird der Getriebemotor 43 mit der umgekehrten Drehrichtung eingeschaltet, wodurch zwangsweise die Rollobahn 22 auf der Wickelwelle 36 aufgewickelt wird. Die beiden Schubglieder 38 und 39 werden hierdurch ebenfalls zwangsweise gegen die Wirkung der Federmotoren 51 und 65 in das jeweils zugehörige Speicherrohr 55, 56 zurückgeschoben.

Der Vorteil dieser Anordnung besteht darin, dass, abgesehen von der Wickelwelle 36, keine langen Bauteile erforderlich sind. Der Vorteil des reibungsarmen Betriebs der Schubglieder bleibt hingegen erhalten.

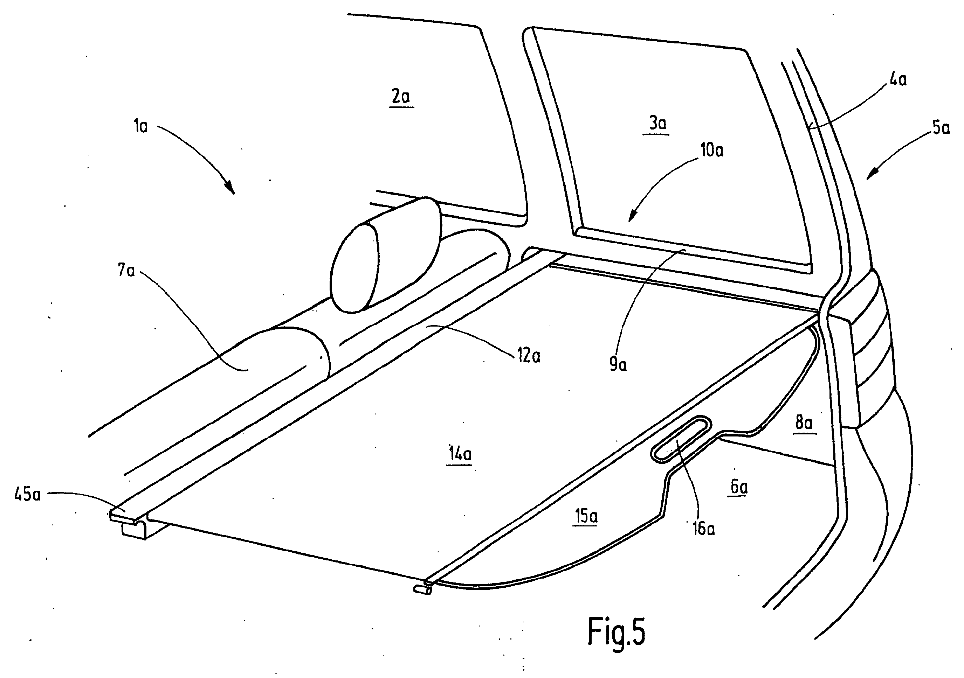

Fig. 5 zeigt in einer perspektivischen Darstellung eine Heckpartie 1a eines Kombi-Pkw. Die Figur lässt zwei hintere rechte Seitenfenster, 2a und 3a erkennen, sowie einen Teil eines Randes 4 und einer Heckklappenöffnung 5a. Bei der Heckklappenöffnung 5a beginnt eine Ladebucht 6a, die nach vorne durch eine Rücksitzlehne 7a einer Rücksitzbank begrenzt ist. Seitlich ist die Ladebucht 6a von Seitenwänden 8a begrenzt, die bis zu einer Fensterunterkante 9a reichen. Die Fensterunterkante 9a entspricht der Höhe der Rücksitzlehne 7a. Nach oben wird die Ladebucht 6a durch eine Laderaumabdeckung 10a optisch verschlossen.

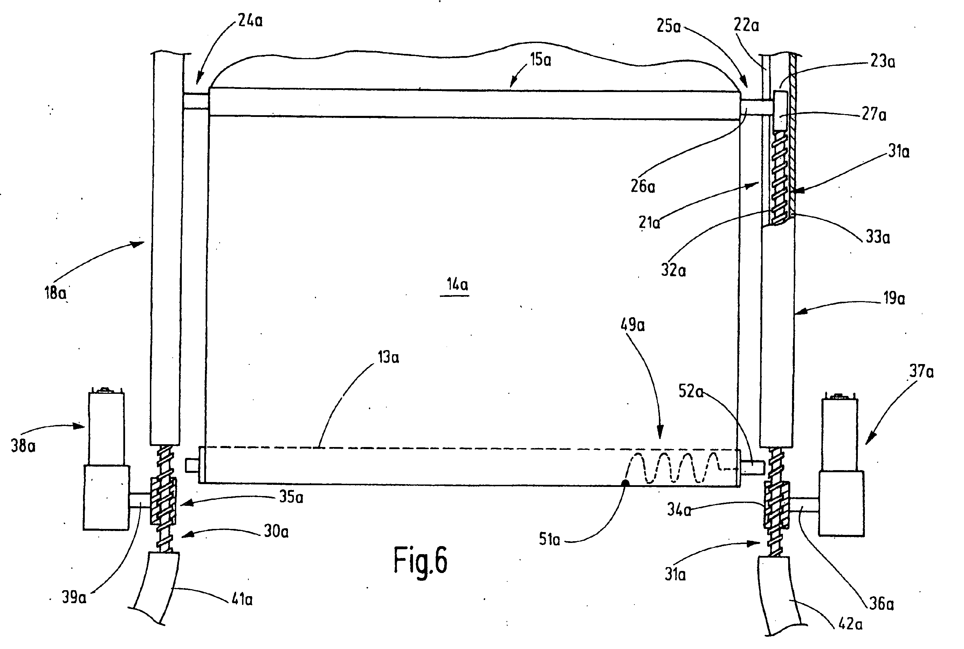

Zu der Laderaumabdeckung 10a gehört ein herausnehmbares längliches Gehäuse 12a, indem eine Wickelwelle 13a (Fig. 6) drehbar gelagert ist. An der Wickelwelle 13a ist eine Rollobahn 14a mit einer Kante befestigt. Das andere bewegliche Ende der Rollobahn 14a ist mit einer Konturplatte 15a verbunden. Die Konturplatte 15a ist biegesteif und enthält eine Grifföffnung 16a. Die äußere Kontur der Konturplatte 15a ist an den Verlauf der Innenseite der nicht veranschaulichten Heckklappe angepasst.

Die Laderaumabdeckung 10a arbeitet elektrisch angetrieben. Das Antriebskonzept ist in Fig. 6 dargestellt.

Seitlich unterhalb der Fensterunterkante 9a verläuft auf jeder Seite eine Führungsschiene 18a, 19a. Die beiden Führungsschienen 18a und 19a sind beispielsweise Bestandteil einer Konturplatte die im Fahrzeug angebracht ist. Jede der Führungsschienen 18a, 19a enthält eine Führungsnut 21a. Der Querschnitt der Führungsnut 21a setzt sich aus einem Nutenschlitz 22a und einer Nutenkammer 23a zusammen. Die beiden Nutenschlitze 22a der beiden Führungsschienen 19a, 18a zeigen aufeinander zu.

Die Führungsschienen 18a, 19a dienen der gleitenden Führung von Führungsstücken 24a, 25a, die an jener Stelle mit der Konturplatte 15a verbunden sind, an der die Konturplatte 15a in die Rollobahn 14a übergeht.

Jedes Führungsteil 25a, 24a, setzt sich aus einem Halsteil 26a und einem Gleitstück 27a zusammen. Das Halsteil 26a ist so bemessen, dass es mit Spiel durch den Nutenschlitz 22a passt. Das Gleitstück 27a ist hingegen an den Querschnitt der Nutenkammer 23a angepasst, d.h. beispielsweise zylindrisch.

Die Bewegung der Konturplatte geschieht mit Hilfe zweier linienförmiger Schubglieder 30a und 31a. Die Schubglieder 30a und 31a sind untereinander gleich aufgebaut, weshalb es genügt, lediglich das Schubglied 31a näher zu erläutern. Es setzt sich aus einer zylindrischen, biegeelastischen Seele 32a und einer darauf fest angebrachten Wendel 33a zusammen. Hierdurch entsteht eine Art biegeelastische Zahnstange mit Kreisquerschnitt, die rundum schräg verzahnt ist. Die Wendel 33a bildet sozusagen einen fortlaufenden Zahn.

Der Außendurchmesser des Schubglieds 31a bzw. 30a entspricht der lichten Weite der Nutenkammer 23a und ist größer als die Schlitzweite 22a. Hierdurch wird sichergestellt das Schubglied 30a bzw. 31a ausknicksicher in der zugehörigen Führungsschiene 18a, 19a geführt ist und Druckkräfte übertragen kann.

Zum Antrieb des Schubgliedes 31a ist unterhalb der Kassette 12 in dem Kraftfahrzeug ein Antriebszahnrad 34a drehbar gelagert. Ein weiteres Zahnrad 35a dient dem Antrieb des Schubglieds 30a und sitzt in Verlängerung der Führungsschiene 18a etwas unterhalb dieser. Das Antriebszahnrad 34a sitzt drehfest auf einer Ausgangswelle 36a eines Getriebemotors 37a. Auf der anderen Seite der Rollobahn 14a ist ein Getriebemotor 38a vorgesehen, auf dessen Ausgangswelle 39a das bereits erwähnte Zahnrad 35a drehfest sitzt.

Die beiden Antriebsmotoren 37a und 38a sind innerhalb des Kraftfahrzeugs fest angeordnet. Sie sind nicht Bestandteil der Kassette 12a und somit auch nicht herausnehmbar.

Durch die beiden Zahnräder 34a und 35a werden die zugehörigen Schubglieder 30a und 31a in ein Arbeitstrum und ein Leertrum aufgeteilt. Das Arbeitstrum verläuft in der jeweiligen Führungsschiene 18a, 19a, während das Leertrum in Speicherrohren 41a und 42a aufgenommen wird.

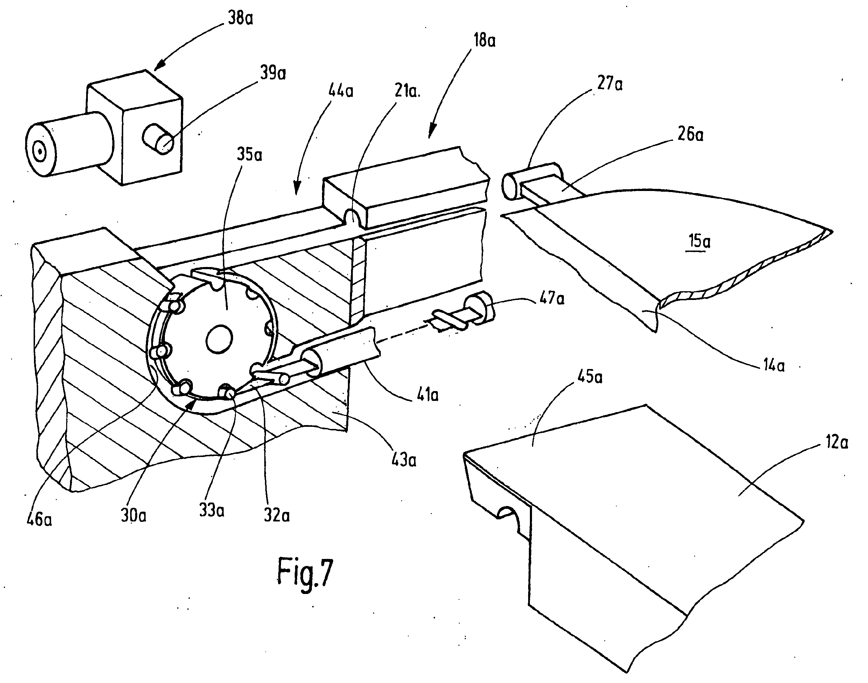

Fig. 7 zeigt einen Ausschnitt aus dieser Anordnung in einer abgebrochenen perspektivischen Darstellung. Zu erkennen ist die linke Führungsschiene 18a mit der darin enthaltenen Führungsnut 21a. Unterhalb der Führungsnut 21a verläuft das zugehörige Speicherrohr 41a. Zwischen der Führungsnut 21a und dem Speicherrohr 41a liegt das Antriebezahnrad 35a, dessen Drehachse horizontal ausgerichtet ist und rechtwinklig zu der Längsachse des Kraftfahrzeugs liegt. Das Zahnrad 35a befindet sich in einem Getriebegehäuse 43a, das an seiner Oberseite mit einer Ausnehmung 44a versehen ist. Die Ausnehmung 44a nimmt einen Fortsatz 45a auf, der an der Oberseite an beiden Enden des Kassettengehäuses 12a ausgebildet ist.

Das Getriebegehäuse 43a bildet einen um das Zahnrad 35a verlaufenden Führungskanal 46a, der die Aufgabe hat dem Schubglied 30a den erforderlichen gekrümmten Verlauf aufzuzwingen, damit es mit der Verzahnung des Zahnrads 35a im formschlüssigen Eingriff bleibt. Das Zahnrad 35a liegt unterhalb der Führungsnut 41a an dem vorderen Ende der jeweiligen Führungsschiene 18a.

Im Bereich der Ausnehmung 44a, die etwa oberhalb der des Antriebszahnrades 35a liegt, ist die Führungsnut 21a in horizontaler Richtung halbiert, d.h. die untere Hälfte befindet sich in dem Gehäuse 43a während die obere Hälfte an der Unterseite des Fortsatzes 45a ausgebildet ist. Bei eingesetztem Kassettengehäuse 12a bildet der Fortsatz 45a zusammen mit dem Gehäuse 43a die vollständige Führungsnut 21a, in der das Schubglied 30a ausknicksicher geführt ist.

Der Antriebsmotor 38a zum Antrieb des Zahnrads 35a ist links oben schematisch angedeutet.

Das Speicherrohr 41a steckt in einer Bohrung 49a des Getriebegehäuses 43a. Am anderen Ende des Speicherrohrs 41a, das parallel zu der Führungsnut 21 mit einem Abstand verläuft, der dem Außendurchmesser des Antriebsrades 35a zuzüglich dem Durchmesser des Vorschubgliedes 30a entspricht, befindet sich ein formschlüssiger Anschlag 47a.

Der Aufbau der gegenüberliegenden Seite ist entsprechend spiegelsymmetrisch und braucht nicht im einzelnen erläutert zu werden.

Die Tuchspannung in der Rollobahn 14a wird in der üblichen Weise mit Hilfe eines Federmotors 49a erzeugt, der im Inneren der rohrförmigen Wickelwelle 13a sitzt. Der Federmotor 49a ist beispielsweise eine Schraubenfeder, die bei 51a mit der Wickelwelle 13a drehfest verbunden ist, während ihr anderes Ende an einem Lagerzapfen 52a befestigt ist, der drehfest in dem Kassettengehäuse 12a sitzt.

In dem vollkommen eingefahrenen Zustand liegen die beiden Führungsstücke 24a und 25a mit ihren Gleitstücken 27a unterhalb des Fortsatzes 45a des Gehäuses 12a. Sie befinden sich damit in jenem Bereich der Führungsnut 12a, der auf das Gehäuse 43a und den Fortsatz 45a aufgeteilt ist. Die Vorschubglieder 30a und 31a nehmen die in Fig. 7 gezeigte Position ein, in der sie stumpf an den Anschlag 47a am Ende des zugehörigen Speicherrohrs 41a bzw. 42a anstoßen. Diese Situation wird beispielsweise durch Messen des von dem Motor 38a bzw. 37a aufgenommenen Strom erfasst, und die Motoren 37a, 38a werden stillgesetzt.

Das dem Gleitstück 27a benachbarte Ende jedes Schubgliedes 30a, 31a ist, wie Fig. 7 zeigt, ein Stück weit unterhalb der Führungsnut 21a zurückgezogen. Es steht auf ca. 11 Uhr, wenn die Flachseite des Antriebszahnrads 35a als Zifferblatt aufgefasst wird.

In dieser Position kann der Benutzer die Kassette 12a, zusammen mit dem Rollo, ohne weiteres entnehmen. Aus der Kassette 12a steht lediglich ein Stück des Konturteils 15a noch vor.

Bei herausgenommener Kassette 12a ist die Ladebucht 6a nach oben völlig offen. Es gibt keine Teile, die sich quer über die Ladebucht erstrecken. Nach Umklappen der Rückeitzlehnen 7a steht ein ununterbrochener großer Laderaum zur Verfügung.

Wenn der Benutzer bei aufgerichteten Rücksitzlehnen 7a die Ladebucht 6a nach oben verschließen will, setzt er in der gezeigten Stellung der Vorschubglieder 30a, 31a die Kassette 12a mit den Fortsätzen 45a in die zugehörigen Ausnehmungen 44a ein. In dieser Position kann die Kassette 14a durch nicht weiter gezeigte Verriegelungsmechanismen, die willkürlich zu öffnen sind, verriegelt werden. Sodann können durch einen nicht weiter gezeigten Schalter die beiden Antriebsmotoren 37a und 38a gleichzeitig eingeschaltet werden.

Da es sich in beiden Fällen um permanent erregte Gleichstrommotoren handelt, laufen sie innerhalb einer relativ kleinen Toleranz mit nahezu derselben Drehzahl. Folglich laufen auch die beiden mit ihnen gekoppelten Antriebszahnräder 34a und 35a mit praktisch derselben Geschwindigkeit. Da mit ihnen formschlüssig jeweils das zugehörige Vorschubglied 30a, 31a in Eingriff steht, wird das betreffende Vorschubglied 30a, 31a aus dem Speicherrohr 41a bzw. 42a vorgezogen und um das Antriebszahnrad 30a bzw. 31a herum in die Führungsnut 21a der beiden Führungsschienen 18a, 19a gefördert. Nach einem kurzen Stück Leerweg wird jedes der Vorschubglieder 30a, 31a stumpf an die in der Führungsnut befindlichen Gleitsteine 27a anstoßen und das Gleitstück 27a vor sich her in Richtung auf die Hecköffnung 5a schieben. Dadurch wird das Konturteil 15a mitgenommen und die Rollobahn 14a wird gegen die Wirkung des Federmotors 49a von der Wickelwelle 13a abgewickelt.

Wenn das Konturteil 15a seine Endstellung neben der Heckklappe erreicht hat, stoßen die beiden Gleitstücke 27a in ihren Führungsnuten 21a an entsprechende formschlüssige Anschläge an. Dadurch wird jeder der beiden Antriebsmotoren 37a, 38a abrupt blockiert. Der Blockierstrom wird gemessen und es wird unabhängig von der Schaltersrtellung der Strom für beide Motoren 37a, 38a abgeschaltet, um eine Überlastung zu verhindern.

Da beide Motoren innerhalb des Toleranzfensters mit gleicher Drehzahl arbeiten, werden beide seitliche Enden der Konturplatte 15a mit praktisch derselben Geschwindigkeit laufen. Ein Schiefziehen ist nicht zu beobachten. Selbst wenn die Motoren hinsichtlich der Drehzahl ein wenig auseinander driften sollten, wird der Hubunterschied durch Anstoßen an den formschlüssigen Anschlag egalisiert.

Abgesehen von diesen Synchronisiermaßnahmen, die rein mechanisch wirken und lediglich am Ende des Bewegungshubs eingreifen, ist keine weitere Synchronisation vorgesehen. Damit vereinfacht sich die Steuerung wesentlich.

Außerdem ist unschwer zu erkennen, dass verhältnismäßig wenig Reibung in dem System auftritt. Die von dem jeweiligen Motor aufzubringende Kraft setzt sich aus der Kraft zusammen, die für die Überwindung der Vorspannkraft des Federmotors 49a erforderlich ist, zuzüglich der Reibung, den das Vorschubglied in dem Umlenkkanal um das Antriebszahnrad 35a erfährt. Im Anschluss daran kann das jeweilige Vorschubglied im Wesentlichen gestreckt und kann damit praktisch reibungsarm laufen.

Es ist unschwer zu erkennen, dass das Einfahren bzw. Öffnen der Laderaumabdeckung sinngemäß in der umgekehrten Weise erfolgt bis die Eingangs beschriebene Ausgangslage erreicht ist. Der Federmotor wickelt die Rollbahn auf der Wickelwelle auf.

Ein Fensterrollo für Kraftfahrzeugfenster weist seitlich der Rollobahn verlaufende Führungsschienen auf. Je Führungsschiene ist ein linienförmiges Schubglied vorgesehen. Jedes Schubglied wird für sich über ein eigenes Zahnrad angetrieben. Dadurch entfallen kompliziert verlaufende Führungsrohre, die obendrein sehr viel Reibung erzeugen.

Eine Laderaumabdeckung weist je Seite der Rollobahn eine Führungsschiene auf. Zum Antrieb der Rollobahn ist je Führungsschiene ein Vorschubglied vorgesehen. Das Vorschubglied ist als nicht-endloses Antriebsglied ausgeführt. Jedes Vorschubglied wird über einen eigenen Motor und ein eigenes Zahnrad angetrieben. Eine elektrische Synchronisation der Motoren ist nicht vorgesehen.

## Patentansprüche

1. Fensterrollo (21) für Kraftfahrzeuge,
mit einer drehbar gelagerten Wickelwelle (36), die zwei Stirnenden aufweist,
mit einer Rollobahn (22), die mit einer Kante an der Wickelwelle (36) befestigt ist,
mit einem Zugstab (31), der an einer von der Wickelwelle (36) abliegenden Kante mit der Rollobahn (22) verbunden ist.
mit zwei Führungsschienen (25,26), die beidseits der aufgespannten Rollobahn (22) verlaufen und formschlüssig den Zugstab (31) führen,
mit zwei Schubgliedern (38,39), von denen das eine der einen Führungsschiene (25,26) und das andere der anderen Führungsschiene (25,26) zugeordnet ist, die durch die Führungsschienen (25,26) geführt sind, die beide eine Verzahnung (42) tragen und die mit dem Zugstab (31) schiebend zusammenwirken,
mit zwei Antriebszahnräder (48,49), von denen das eine dem einen Schubglied (38,39) und das andere dem anderen Schubglied (38,39) zugeordnet ist, die bei den Stirnenden der Wickelwelle (36) angeordnet sind,
mit einer Verbindungswelle (47), mit der die beiden Antriebszahnräder (48,49) drehfest gekuppelt sind,
wobei die Schubglieder (38,39) kinematisch zwischen den Antriebsrädern (48,49) und dem Zugstab (31) liegen,
mit einem elektrischen Antriebsmotor (43), der mit der Wickelwelle (36) unmittelbar drehfest gekuppelt ist und
mit einem Federmotor (51), von dem ein Ende mit der Verbindungswelle (47) gekuppelt ist und dessen anderes Ende mit der Karosserie verbunden ist.

2. Fensterrollo (21) für Kraftfahrzeuge,
mit einer drehbar gelagerten Wickelwelle (36), die zwei Stirnenden aufweist,
mit einer Rollobahn (22), die mit einer Kante an der Wickelwelle (36) befestigt ist,
mit einem Zugstab (31), der an einer von der Wickelwelle (36) abliegenden Kante mit der Rollobahn (22) verbunden ist.
mit zwei Führungsschienen (25,26), die beidseits der aufgespannten Rollobahn (22) verlaufen und formschlüssig den Zugstab (31) führen,
mit zwei Schubgliedern (38,39), von denen das eine der einen Führungsschiene (25,26) und das andere der anderen Führungsschiene (25,26) zugeordnet ist, die durch die Führungsschienen (25,26) geführt sind, die beide eine Verzahnung (42) tragen und die mit dem Zugstab (31) schiebend zusammenwirken,
mit zwei Antriebazahnrädern (48,49), von denen das eine dem einen Schubglieder (38,39) und das andere dem anderen Schubglied (38,39) zugeordnet ist, die bei den Stirnenden der Wickelwelle (36) angeordnet sind,
wobei die Schubglieder (38,39) kinematisch zwischen den Antriebsrädern (48,49) und dem Zugstab (31) liegen,
mit einem elektrischen Antriebsmotor (43) , der mit der Wickelwelle (36) unmittelbar drehfest gekuppelt ist,
mit einem Federmotor (51), der mit dem einen Antriebszahnrad (49) gekuppelt ist, und
mit einem weiteren Federmotor (65), der mit dem anderen Antriebszahnrad (48) gekuppelt ist.

3. Fensterrollo nach Anspruch 1 oder 2, **dadurch gekennzeichnet, dass** der Zugstab (31) längenveränderlich ist.

4. Fensterrollo nach Anspruch 1 oder 2, **dadurch gekennzeichnet, dass** die Führungsschienen (25,26) einends in der Nähe der Wickelwelle (36) beginnen,

5. Fensterrollo nach Anspruch 1 oder 2, **dadurch gekennzeichnet, dass** die Führungsschienen (25,26) parallel oder konvergierend zueinander verlaufen.

6. Fensterrollo nach Anspruch 1 oder 2, **dadurch gekennzeichnet, dass** jede Führungsschiene (25,26) eine Führungsnut (27) enthält.

7. Fensterrollo nach Anspruch 1 oder 2, **dadurch gekennzeichnet, dass** sich der Querschnitt der Führungsnut (27) aus einer Nutenkammer (28) und einem Nutenschlitz (29) zusammensetzt, wobei der Durchmesser der Nutenkammer (28) größer ist als die lichte Weite des Schlitzes (29) derart, dass eine hinterschnittene Führungsnut (28) entsteht.

8. Fensterrollo nach Anspruch 7, **dadurch gekennzeichnet, dass** in der Nutenkammer (28) das Schubglied (38.39) ausknicksicher geführt ist.

9. Fensterrollo nach Anspruch 1 oder 2, **dadurch gekennzeichnet, dass** das Schubglied (38.39) eine Rundumverzahnung (42) aufweist.

10. Fensterrollo nach Anspruch 1 oder 2, **dadurch gekennzeichnet, dass** das Antriebszahnrad (48,49) ein Stirnzahnrad ist.

11. Fensterrollo nach Anspruch 1 oder 2, **dadurch gekennzeichnet, dass** die Verbindungswelle (47) außerhalb der Wickelwelle (36) zu dieser parallel verläuft.

12. Fensterrollo nach Anspruch 1 oder 2, **dadurch gekennzeichnet, dass** die Verbindungswelle (47) durch die wickelwelle (36) verläuft.

13. Fensterrollo nach Anspruch 1 oder 2, **dadurch gekennzeichnet, dass** der Federmotor von einer Schraubenfeder (67,79) oder einer Spiralfeder (54) gebildet ist.

14. Fensterrollo nach Anspruch 1 oder 2, **dadurch gekennzeichnet, dass** für jedes Schubglied (38,39) ein eigenes Speicherrohr (61,62) vorhanden ist, das bei eingefahrenem Fensterrollo das Leertrum des Schubglieds (38,39) aufnimmt.

15. Fensterrollo nach Anspruch 14, **dadurch gekennzeichnet, dass** das Speicherrohr (61,62) aus einem flexiblen Material besteht.

16. Laderaumabdeckung für Kraftfahrzeuge mit einer drehbar gelagerten Wickelwelle (13a),
mit einer Rollobahn (14a), die mit einer Kante an der Wickelwelle (13a) befestigt ist,
mit einem Zugstab (15a), der an einer von der Wickelwelle (13a) abliegenden Kante mit der Rollobahn (14a) verbunden ist.
mit zwei Führungsschienen (18a,19a), die beidseits der aufgespannten Rollobahn (14a) verlaufen, die formechlüssig den Zugstab (15a) führen, von denen jede eine Führungsnut (21a) für den Zugstab (15a) aufweist,
mit zwei Speicherrohren (41a,42a), die unterhalb der jeweils benachbarten Führungsschiene (18a,19a) verlaufen,
mit zwei nicht endlosen Schubgliedern (30a,31a), von denen das eine der einen Führungsschiene (18a,19a) und das andere der anderen Führungsschiene (18a,19a) zugeordnet ist, die durch die Führungsnut (21a) der Führungeschienen (19a,19a) geführt sind, von denen jede eine Verzahnung (33a) trägt, die mit dem Zugstab (15a) schiebend zusammenwirken und die von dem Zugstab (15a) betriebsmäßig trennbar sind,
mit lediglich zwei Antriebszahnräder (34a,35a), von denen das eine der einen Führungsschiene (18a) und das andere der anderen Führungsschiene (19a) zugeordnet ist, die vor den Stirnenden der Führungsschiene (18a,19a) angeordnet sind und die mit den Schubgliedern (30a,31a) formschlüssig in Eingriff stehen,
mit einem ersten elektrischen Antriebsmotor (38a), der mit dem einen Antriebszahnrad (35a) gekuppelt und karosseriefest ist, und
mit einem zweiten elektrischen Antriebsmotor (37a), der mit dem anderen Antriebszahnrad (34a) gekuppelt und karosseriefest ist,
wobei die Antriebsmotoren (37a,38a) während der Bewegung weder elektrisch noch mechanisch miteinander synchronisiert sind.

17. Laderaumabdeckung nach Anspruch 16, **dadurch gekennzeichnet, dass** der Zugstab (15a) längenveränderlich ist.

18. Laderaumabdeckung nach Anspruch 16, **dadurch gekennzeichnet, dass** die Führungsschienen (18a,19a) einends in der Nähe der Wickelwelle (13a) beginnen,

19. Laderaumabdeckung nach Anspruch 16, **dadurch gekennzeichnet, dass** die Führungsschienen (18a,19a) parallel oder konvergierend zueinander verlaufen.

20. Laderaumabdeckung nach Anspruch 16, **dadurch gekennzeichnet, dass** das Speicherrohr (41,42a) einstückig mit der Führungsschiene (18a,19a) ausgeführt ist.

21. Laderaumabdeckung nach Anspruch 16, **dadurch gekennzeichnet, dass** der Innenraum des Speicherrohrs (41a,42a) als Nut ausgeführt ist.

22. Laderaumabdeckung nach Anspruch 16, **dadurch gekennzeichnet, dass** sich der Querschnitt der Führungsnut (21a) aus einer Nutenkammer (23a) und einem Nutenschlitz (22a) zusammensetzt, wobei der Durchmesser der Nutenkammer (23a) größer ist als die lichte Weite des Schlitzes (21a) derart, dass eine hinterschnittene Führungsnut (21a) entsteht.

23. Laderaumabdeckung nach Anspruch 22, **dadurch gekennzeichnet, dass** in der Nutenkammer (23a) das Schubglied (30a,31a) ausknicksicher geführt ist.

24. Laderaumabdeckung nach Anspruch 16, **dadurch gekennzeichnet, dass** das Schubglied (30a,31a) eine Rundumverzahnung (33a) aufweist.

25. Laderaumabdeckung nach Anspruch 16, **dadurch gekennzeichnet, dass** jedes Schubglied (30a,31a) zwei freie Stirnenden aufweist.

26. Laderaumabdeckung nach Anspruch 16, **dadurch gekennzeichnet, dass** das Antriebszahnrad (34a,35a) ein Stirnzahnrad ist.

27. Laderaumabdeckung nach Anspruch 16, **dadurch gekennzeichnet, dass** die Antriebsmotoren (37a,38a) innerhalb des Arbeitshubs unsynchronisiert laufen.

28. Laderaumabdeckung nach Anspruch 16, **dadurch gekennzeichnet, dass** jedem Schubglied (30a,31a) zwei Anschlagmittel (47a) zugeordnet sind, durch die individuell der Hub jedes Schubglieds (30a,31a) definiert ist.

29. Laderaumabdeckung nach Anspruch 28, **dadurch gekennzeichnet, dass** ausschließlich die Anschlagmittel (47a) zur Synchronisation der Antriebsmotoren (37a,38a) verwendet werden.

30. Laderaumabdeckung nach Anspruch 16, **dadurch gekennzeichnet, dass** die Wickelwelle (13a) in einem von dem Fahrzeug trennbaren Gehäuse (12a) drehbar gelagert ist.

## Claims

1. Window roller blind (21) for motor vehicles,
with a rotatably mounted winding shaft (36), which has two face ends,
with a blind sheet (22), which is fastened at one edge to the winding shaft (36),
with a pull rod (31), which is connected to the blind sheet (22) at an edge remote from the winding shaft (36),
with two guide rails (25, 26), which run on both sides of the opened blind sheet (22) and guide the pull rod (31) in a positive locking manner,
with two pushing members (38, 39), of which one is associated with one guide rail (25, 26) and the other is associated with the other guide rail (25, 26), which are guided by the guide rails (25, 26), which both bear a tooth system (42) and which cooperate with the pull rod (31) in a sliding manner,
with two drive gear wheels (48, 49), of which one is associated with one pushing member (38, 39) and the other is associated with the other pushing member (38, 39), which are arranged at the face ends of the winding shaft (36),
with a connecting shaft (47), with which the two drive gear wheels (48, 49) are coupled to be fixed against rotation,
wherein the pushing members (38, 39) lie kinematically between the drive wheels (48, 49) and the pull rod (31),
with an electric drive motor (43), which is coupled to the winding shaft (36) directly to be fixed against rotation, and
with a spring motor (51), of which one end is coupled to the connecting shaft (47) and its other end is connected to the vehicle body.

2. Window roller blind (21) for motor vehicles,
with a rotatably mounted winding shaft (36), which has two face ends,
with a blind sheet (22), which is fastened at one edge to the winding shaft (36),
with a pull rod (31), which is connected to the blind sheet (22) at an edge remote from the winding shaft (36),
with two guide rails (25, 26), which run on both sides of the opened blind sheet (22) and guide the pull rod (31) in a positive locking manner,
with two pushing members (38, 39), of which one is associated with one guide rail (25, 26) and the other is associated with the other guide rail (25, 26), which are guided by the guide rails (25, 26), which both bear a tooth system (42) and cooperate with the pull rod (31) in a sliding manner,
with two drive gear wheels (48, 49), of which one is associated with one pushing member (38, 39) and the other is associated with the other pushing member (38, 39), which are arranged at the face ends of the winding shaft (36),
wherein the pushing members (38, 39) lie kinematically between the drive wheels (48, 49) and the pull rod (31),
with an electric drive motor (43), which is coupled to the winding shaft (36) directly to be fixed against rotation,
with a spring motor (51), which is coupled to one drive gear wheel (49), and
with a further spring motor (65), which is coupled to the other drive gear wheel (48).

3. Window roller blind according to claim 1 or 2, **characterised in that** the pull rod (31) is adjustable in length.

4. Window roller blind according to claim 1 or 2, **characterised in that** the guide rails (25, 26) begin at one end in the vicinity of the winding shaft (36).

5. Window roller blind according to claim 1 or 2, **characterised in that** the guide rails (25, 26) run parallel to one another or converge towards one another.

6. Window roller blind according to claim 1 or 2, **characterised in that** each guide rail (25, 26) contains a guide groove (27).

7. Window roller blind according to claim 1 or 2, **characterised in that** the cross-section of the guide groove (27) is configured from a groove chamber (28) and a groove slot (29), wherein the diameter of the groove chamber (28) is larger than the width of the slot (29) such that an undercut guide groove (28) is formed.

8. Window roller blind according to claim 7, **characterised in that** the pushing member (38, 39) is guided in the groove chamber (28) to be secure against buckling.

9. Window roller blind according to claim 1 or 2, **characterised in that** the pushing member (38, 39) has a full tooth system (42).

10. Window roller blind according to claim 1 or 2, **characterised in that** the drive gear wheel (48, 49) is a spur gear wheel.

11. Window roller blind according to claim 1 or 2, **characterised in that** the connecting shaft (47) runs outside the winding shaft (36) and parallel thereto.

12. Window roller blind according to claim 1 or 2, **characterised in that** the connecting shaft (47) runs through the winding shaft (36).

13. Window roller blind according to claim 1 or 2, **characterised in that** the spring motor is formed by a coil spring (67, 69) or a spiral spring (54).

14. Window roller blind according to claim 1 or 2, **characterised in that** each pushing member (38, 39) has its own storage tube (61, 62), which takes up the slack of the pushing member (38, 39) when the window roller blind is retracted.

15. Window roller blind according to claim 14, **characterised in that** the storage tube (61, 62) is made from a flexible material.

16. Cargo area cover for motor vehicles
with a rotatably mounted winding shaft (13a),
with a blind sheet (14a), which is fastened at one edge to the winding shaft (13a),
with a pull rod (15a), which is connected to the blind sheet (14a) at an edge remote from the winding shaft (13a),
with two guide rails (18a, 19a), which run on both sides of the opened blind sheet (14a), which guide the pull rod (15a) in a positive locking manner, each of which has a guide groove (21a) for the pull rod (15a),
with two storage tubes (41a, 42a), which run below the respectively adjacent guide rail (18a, 19a),
with two non-endless pushing members (30a, 31a), of which one is associated with one guide rail (18a, 19a) and the other is associated with the other guide rail (18a, 19a) and which are guided through the guide groove (21a) of the guide rails (19a, 19a), each of which bears a tooth system (33a), which cooperate with the pull rod (15a) in a sliding manner and which are operatively separated from the pull rod (15a), with only two drive gear wheels (34a, 35a), of which one is associated with one guide rail (18a) and the other is associated with the other guide rail (19a), which are arranged in front of the face ends of the guide rail (18a, 19a) and which engage with the pushing members (30a, 31a) in a positive locking manner,
with a first electric drive motor (38a), which is coupled to one drive gear wheel (35a) and is fixed to the vehicle body, and
with a second electric drive motor (37a), which is coupled to the other drive gear wheel (34a) and is fixed to the vehicle body,
wherein the drive motors (37a, 38a) are not synchronised to one another either electrically or mechanically during movement.

17. Cargo area cover according to claim 16, **characterised in that** the pull rod (15a) is adjustable in length.

18. Cargo area cover according to claim 16, **characterised in that** the guide rails (18a, 19a) begin at one end in the vicinity of the winding shaft (13a).

19. Cargo area cover according to claim 16, **characterised in that** the guide rails (18a, 19a) run parallel to one another or converge towards one another.

20. Cargo area cover according to claim 16, **characterised in that** the storage tube (41, 42a) is configured in one piece with the guide rail (18a, 19a).

21. Cargo area cover according to claim 16, **characterised in that** the interior of the storage tube (41 a, 42a) is configured as a groove.

22. Cargo area cover according to claim 16, **characterised in that** the cross-section of the guide groove (21a) is configured from a groove chamber (23 a) and a groove slot (22a), wherein the diameter of the groove chamber (23a) is larger than the width of the slot (22a) such that an undercut guide groove (21a) is formed.

23. Cargo area cover according to claim 22, **characterised in that** the pushing member (30a, 31a) is guided in the groove chamber (23a) to be secure against buckling.

24. Cargo area cover according to claim 16, **characterised in that** the pushing member (30a, 31a) has a full tooth system (33a).

25. Cargo area cover according to claim 16, **characterised in that** each pushing member (30a, 31 a) has two free face ends.

26. Cargo area cover according to claim 16, **characterised in that** the drive gear wheel (34a, 35a) is a spur gear wheel.

27. Cargo area cover according to claim 16, **characterised in that** the drive motors (37a, 38a) run unsynchronised within the working stroke.

28. Cargo area cover according to claim 16, **characterised in that** each pushing member (30a, 31a) has two associated stop elements (47a), by means of which the stroke of each pushing member (30a, 31a) is individually defined.

29. Cargo area cover according to claim 28, **characterised in that** the stop elements (47a) are solely used for synchronisation of the drive motors (37a, 38a).

30. Cargo area cover according to claim 16, **characterised in that** the winding shaft (13a) is rotatably mounted in a housing (12a) detachable from the vehicle.

## Revendications

1. Store à enrouleur pour vitre (21) pour véhicules automobiles,
comprenant un axe d'enroulement (36) monté tournant, qui présente deux extrémités frontales,
comprenant une bande de store (22) qui est fixée par un bord à l'axe d'enroulement (36),
comprenant une barre de traction (31) qui est reliée à la bande de store (22), sur un bord éloigné de l'axe d'enroulement (36),
comprenant deux rails de guidage (25, 26) qui s'étendent de part et d'autre de la bande de store (22) déroulée et guident la barre de traction (31) avec complémentarité de formes,
comprenant deux éléments de poussée (38, 39), dont l'un est associé à un rail de guidage (25, 26) et l'autre est associé à l'autre rail de guidage (25, 26), qui sont guidés par les rails (25, 26), qui portent tous deux une denture (42), et qui coopèrent avec la barre de traction (31) pour exercer une poussée,
comprenant deux roues dentées d'entraînement (48, 49), dont l'une est associée à un élément de poussée (38, 39) et l'autre est associée à l'autre élément de poussée (38, 39) et qui sont disposées près des extrémités frontales de l'axe d'enroulement (36),
comprenant un axe de liaison (47) auquel les deux roues dentées d'entraînement (48, 49) sont accouplées de façon solidaire en rotation,
les éléments de poussée (38, 39) étant situés, du point de vue cinématique, entre les roues d'entraînement (48, 49) et la barre de traction (31),
comprenant un moteur d'entraînement (43) électrique qui est accouplé directement à l'axe d'enroulement (36), de façon solidaire en rotation, et
comprenant un moteur à ressort (51) dont une extrémité est accouplée à l'axe de liaison (47) et dont l'autre extrémité est reliée à la carrosserie.

2. Store à enrouleur pour vitre (21) pour véhicules automobiles,
comprenant un axe d'enroulement (36) monté tournant, qui présente deux extrémités frontales,
comprenant une bande de store (22) qui est fixée par un bord à l'axe d'enroulement (36),
comprenant une barre de traction (31) qui est reliée à la bande de store (22), sur un bord éloigné de l'axe d'enroulement (36),
comprenant deux rails de guidage (25, 26) qui s'étendent de part et d'autre de la bande de store (22) déroulée et guident la barre de traction (31) avec complémentarité de formes,
comprenant deux éléments de poussée (38, 39), dont l'un est associé à un rail de guidage (25, 26) et l'autre est associé à l'autre rail de guidage (25, 26), qui sont guidés par les rails de guidage (25, 26), qui portent tous deux une denture (42), et qui coopèrent avec la barre de traction (31) pour exercer une poussée,
comprenant deux roues dentées d'entraînement (48, 49), dont l'une est associée à un élément de poussée (38, 39) et l'autre est associée à l'autre élément de poussée (38, 39) et qui sont disposées près des extrémités frontales de l'axe d'enroulement (36),
les éléments de poussée (38, 39) étant situés, du point de vue cinématique, entre les roues d'entraînement (48, 49) et la barre de traction (31),
comprenant un moteur d'entraînement (43) électrique qui est accouplé directement à l'axe d'enroulement (36), de façon solidaire en rotation,
comprenant un moteur à ressort (51) qui est accouplé à une roue dentée d'entraînement (49), et
comprenant un moteur à ressort (65) supplémentaire qui est accouplé à l'autre roue dentée d'entraînement (48).

3. Store selon la revendication 1 ou 2, **caractérisé par le fait que** la barre de traction (31) est réglable en longueur.

4. Store selon la revendication 1 ou 2, **caractérisé par le fait que** les rails de guidage (25, 26) commencent avec une extrémité à proximité de l'axe d'enroulement (36).

5. Store selon la revendication 1 ou 2, **caractérisé par le fait que** les rails de guidage (25, 26) sont parallèles ou convergent l'un vers l'autre.

6. Store selon la revendication 1 ou 2, **caractérisé par le fait que** chaque rail de guidage (25, 26) comporte une rainure de guidage (27).

7. Store selon la revendication 1 ou 2, **caractérisé par le fait que** la section de la rainure de guidage (27) se compose d'une cavité de rainure (28) et d'une fente de rainure (29), le diamètre de la cavité de rainure (28) étant supérieur à la largeur intérieure de la fente (29), de manière à créer une rainure de guidage (28) en contre-dépouille.

8. Store selon la revendication 7, **caractérisé par le fait que** l'élément de poussée (38, 39) est guidé dans la cavité de rainure (28) en étant protégé contre le flambage.

9. Store selon la revendication 1 ou 2, **caractérisé par le fait que** l'élément de poussée (38, 39) présente une denture périphérique (42).

10. Store selon la revendication 1 ou 2, **caractérisé par le fait que** la roue dentée d'entraînement (48, 49) est une roue dentée droite.

11. Store selon la revendication 1 ou 2, **caractérisé par le fait que** l'axe de liaison (47) s'étend à l'extérieur de l'axe d'enroulement (36), parallèlement à celui-ci.

12. Store selon la revendication 1 ou 2, **caractérisé par le fait que** l'axe de liaison (47) passe dans l'axe d'enroulement (36).

13. Store selon la revendication 1 ou 2, **caractérisé par le fait que** le moteur à ressort est constitué d'un ressort hélicoïdal (67, 79) ou d'un ressort spiral (54).

14. Store selon la revendication 1 ou 2, **caractérisé par le fait qu'**il existe pour chaque élément de poussée (38, 39) un tube de rangement (61, 62) séparé qui, lorsque le store à enrouleur est rentré, reçoit le tronçon non chargé de l'élément de poussée (38, 39).

15. Store selon la revendication 14, **caractérisé par le fait que** le tube de rangement (61, 62) est constitué d'un matériau souple.

16. Dispositif cache-bagages pour véhicules automobiles,
comprenant un axe d'enroulement (13 a) monté tournant,
comprenant une bande de store (14a) qui est fixée par un bord à l'axe d'enroulement (13a),
comprenant une barre de traction (15a) qui est reliée à la bande de store (14a), sur un bord éloigné de l'axe d'enroulement (13a),
comprenant deux rails de guidage (18a, 19a) qui s'étendent de part et d'autre de la bande de store (14a) déroulée, qui guident la barre de traction (15a) avec complémentarité de formes et qui présentent chacun une rainure de guidage (21a) pour la barre de traction (15a),
comprenant deux tubes de rangement (41a, 42a) qui s'étendent en dessous du rail de guidage (18a, 19a) voisin respectif,
comprenant deux éléments de poussée (30a, 31a) non infinis, dont l'un est associé à un rail de guidage (18a, 19a) et l'autre est associé à l'autre rail de guidage (18a, 19a), qui sont guidés par la rainure de guidage (21a) des rails de guidage (18a, 19a), qui portent chacun une denture (33a), qui coopèrent avec la barre de traction (15a) pour exercer une poussée et qui peuvent être séparés sur le plan fonctionnel de la barre de traction (15a),
comprenant seulement deux roues dentées d'entraînement (34a, 35a), dont l'une est associée à un rail de guidage (18a) et l'autre est associée à l'autre rail de guidage (19a) et qui sont disposées devant les extrémités frontales du rail de guidage (18a, 19a) et coopèrent par complémentarité de formes avec les éléments de poussée (30a, 31a),
comprenant un premier moteur d'entraînement (38a) électrique qui est accouplé à une roue dentée d'entraînement (35a) et est solidaire de la carrosserie, et
comprenant un deuxième moteur d'entraînement (37a) électrique qui est accouplé à l'autre roue dentée d'entraînement (34a) et est solidaire de la carrosserie,
les moteurs d'entraînement (37a, 38a) n'étant synchronisés l'un avec l'autre pendant le mouvement ni sur le plan électrique ni sur le plan mécanique.

17. Dispositif cache-bagages selon la revendication 16, **caractérisé par le fait que** la barre de traction (15a) est réglable en longueur.

18. Dispositif cache-bagages selon la revendication 16, **caractérisé par le fait que** les rails de guidage (18a, 19a) commencent avec une extrémité à proximité de l'axe d'enroulement (13a).

19. Dispositif cache-bagages selon la revendication 16, **caractérisé par le fait que** les rails de guidage (18a, 19a) sont parallèles ou convergent l'un vers l'autre.

20. Dispositif cache-bagages selon la revendication 16, **caractérisé par le fait que** le tube de rangement (41a, 42a) est réalisé d'une seule pièce avec le rail de guidage (18a, 19a).

21. Dispositif cache-bagages selon la revendication 16, **caractérisé par le fait que** l'intérieur du tube de rangement (41a, 42a) est réalisé sous forme de rainure.

22. Dispositif cache-bagages selon la revendication 16, **caractérisé par le fait que** la section de la rainure de guidage (21a) se compose d'une cavité de rainure (23a) et d'une fente de rainure (22a), le diamètre de la cavité de rainure (23a) étant supérieur à la largeur intérieure de la fente (21a), de manière à créer une rainure de guidage (21a) en contre-dépouille.

23. Dispositif cache-bagages selon la revendication 22, **caractérisé par le fait que** l'élément de poussée (30a, 31a) est guidé dans la cavité de rainure (23a) en étant protégé contre le flambage.

24. Dispositif cache-bagages selon la revendication 16, **caractérisé par le fait que** l'élément de poussée (30a, 31a) présente une denture périphérique (33a).

25. Dispositif cache-bagages selon la revendication 16, **caractérisé par le fait que** chaque élément de poussée (30a, 31a) présente deux extrémités frontales libres.

26. Dispositif cache-bagages selon la revendication 16, **caractérisé par le fait que** la roue dentée d'entraînement (34a, 35a) est une roue dentée droite.

27. Dispositif cache-bagages selon la revendication 16, **caractérisé par le fait que** les moteurs d'entraînement (37a, 38a) fonctionnent de manière non synchronisée à l'intérieur de la course de travail.

28. Dispositif cache-bagages selon la revendication 16, **caractérisé par le fait qu'**il est associé à chaque élément de poussée (30a, 31a) deux moyens formant butées (47a) qui définissent individuellement la course de chaque élément de poussée (30a, 31a).

29. Dispositif cache-bagages selon la revendication 28, **caractérisé par le fait que** l'on utilise exclusivement les moyens formant butées (47a) pour la synchronisation des moteurs d'entraînement (37a, 38a).

30. Dispositif cache-bagages selon la revendication 16, **caractérisé par le fait que** l'axe d'enroulement (13a) est monté tournant dans un boîtier (12a) pouvant être séparé du véhicule.
